# DEMANDE DE BREVET EUROPEEN

(11) **EP 2 975 361 A1**
(43) Date de publication de la demande: **20.01.2016**
(21) Numéro de dépôt: 15176328.1
(22) Date de dépôt: 10.07.2015
(51) Int. Cl.: G01C 21/20, G08G 5/00

(54) **TRAITEMENT DES DONNEES D'UN PLAN DE VOL**

(30) Priorité: 18.07.2014 FR 1401623
(71) Demandeur: THALES, 92400 Courbevoie (FR)
(72) Inventeur: FOURNIER, François, 31036 TOULOUSE CEDEX 1 (FR); TRINQUECOSTE, Frédéric, 31036 TOULOUSE CEDEX 1 (FR); GUILMEAU, Sébastien, 31036 TOULOUSE CEDEX 1 (FR)
(74) Mandataire: Lucas, Laurent Jacques

(57) **Abrégé**

Il est divulgué un procédé mis en oeuvre par ordinateur de gestion des données d'un plan de vol d'un aéronef comprenant les étapes consistant à collecter des données initiales d'un plan de vol opérationnel depuis un système de planification de vol FPS par un appareil électronique de type sac de vol électronique EFB; convertir lesdites données initiales et communiquer lesdites données converties au système avionique du système de gestion de vol FMS, ledit FMS étant apte à calculer un plan de vol avionique à partir des données converties; et récupérer les données du plan de vol avionique tel que traitées par le système de gestion de vol FMS. Des développements décrivent notamment la vérification de la sécurité et/ou de l'intégrité des données initiales converties au moyen de règles de conformité prédéfinies; l'émulation de protocoles avioniques et l'utilisation du chiffrement des données. Des aspects de système et de logiciel sont décrits.

## Description

### Domaine de l'invention

L'invention concerne le domaine de l'avionique, et en particulier celui de la préparation de mission au sol, à bord et pendant le vol.

### Etat de la Technique

Le pilote d'un aéronef utilise les informations de plan de vol dans plusieurs contextes: au sein des équipements avioniques pour la fonction FMS (Flight Management System), généralement sur un "EFB" (Electronic Flight Bag) par exemple de type tablette, avec une fonction "Plan de vol opérationnel" (Operational Flight Plan) ou un "Dossier de vol électronique" (Electronic Flight Folder) ou bien encore au moyen d'une fonction "Carte" (Chart) de l'EFB. Les informations de plan de vol sont aussi contenues dans le système de préparation du vol FPS (Flight Planning System) dont une partie est transmise au contrôle aérien.

Le grand nombre de sources de données et la diversité des utilisations des différentes informations de plan de vol impliquent généralement de nombreuses opérations manuelles et cognitives de la part du personnel naviguant (par exemple le préparateur de mission et le pilote de l'aéronef). Les tâches associées requièrent de nombreuses vérifications et validations, en cohérence.

Dans les systèmes avioniques actuels, le plan de vol est généralement préparé au sol par le préparateur de mission, par exemple en utilisant un outil appelé "Flight Planning System". Une partie du plan de vol est transmise au contrôle aérien pour validation. Une autre partie dudit plan de vol est transmise au sol via un serveur se trouvant à bord de l'avion au moyen d'une fonction appelée "Operational Flight Plan" ou "Electronic Flight Folder". Les informations de plan de vol sont entrées manuellement, c'est-à-dire une par une et donc fastidieusement dans la fonction "Cartes". Le plan de vol en tant que tel est également saisi manuellement par le pilote dans la fonction avion dite de "Flight management" conformément aux consignes édictées par le préparateur de mission.

Ces techniques et pratiques existantes présentent de nombreux inconvénients. Tout d'abord, il n'existe pas de méthode de saisie unifiée puisqu'à ce jour jusqu'à trois méthodes différentes sont possibles pour ce faire. En soi, les temps d'apprentissage ne sont pas rationalisés et cette hétérogénéité peut être source d'erreurs ou à tout le moins de lenteurs. Ensuite, il n'existe pas de vérification intégrée des saisies (par exemple de la cohérence des données). Ces aspects entraînent une surcharge cognitive du pilote, qui est préjudiciable à sa fatigue puisque ces tâches fastidieuses sont requises généralement juste avant le vol.

Il existe un besoin pour des méthodes et des systèmes pour l'optimisation de la saisie des données de plans de vol.

### Résumé de l'invention

Il est divulgué un procédé mis en oeuvre par ordinateur de gestion des données d'un plan de vol d'un aéronef comprenant les étapes consistant à collecter des données initiales d'un plan de vol opérationnel depuis un système de planification de vol FPS par un appareil électronique de type sac de vol électronique EFB; convertir lesdites données initiales et communiquer lesdites données converties au système avionique du système de gestion de vol FMS, ledit FMS étant apte à calculer un plan de vol avionique à partir des données converties; et récupérer ou recevoir les données du plan de vol avionique tel que traitées par le système de gestion de vol FMS.

Il est divulgué un procédé mis en oeuvre par ordinateur de gestion des données d'un plan de vol d'un aéronef comprenant les étapes consistant à collecter des données initiales d'un plan de vol opérationnel depuis un système de planification de vol FPS par un appareil électronique de type sac de vol électronique EFB; vérifier, filtrer, convertir et afficher par ledit EFB lesdites données initiales en un plan de vol consolidé à destination du pilote; communiquer par ledit EFB lesdites données vérifiées et converties au système avionique du système de gestion de vol FMS, ledit FMS étant apte à calculer un plan de vol avionique à partir des données converties; récupérer les données du plan de vol avionique tel que traitées par le système de gestion de vol FMS.

Dans un développement, le système de gestion de vol FMS vérifie la sécurité et/ou l'intégrité des données initiales converties au moyen de règles de conformité prédéfinies.

Dans un développement, le procédé comprend en outre une étape d'émulation de protocole avionique par le système de gestion de vol FMS de manière à calculer un plan de vol avionique à partir des données de plan de vol converties.

Dans un développement, le procédé comprend en outre une étape de comparaison du plan de vol avionique tel que calculé par le système de gestion de vol FMS avec les données initiales de plan de vol opérationnel.

Dans un développement, l'appareil électronique de type sac de vol électronique EFB comprend des moyens d'affichage et l'étape de comparaison du procédé comprenant la simulation et l'affichage sur ledit appareil électronique de type sac de vol électronique EFB du traitement avionique des données initiales du plan de vol opérationnel.

Dans un développement, le procédé comprend en outre la réception d'une ou plusieurs modifications d'une ou plusieurs données initiales du plan de vol opérationnel.

Dans un développement, le procédé comprend la répétition d'une ou de plusieurs étapes parmi lesdites étapes de collecte, conversion, récupération, communication, comparaison ou de simulation.

Dans un développement, le procédé comprend en outre une étape de chiffrement des données avant envoi au système de gestion de vol FMS.

Dans un développement, le sac de vol électronique EFB est une tablette informatique.

Il est divulgué un produit programme d'ordinateur comprenant des instructions de code permettant d'effectuer une ou plusieurs étapes du procédé, lorsque ledit programme est exécuté sur un ordinateur.

Il est divulgué un système comprenant des moyens pour mettre en oeuvre une ou plusieurs étapes du procédé.

Avantageusement, un dialogue entre des systèmes avioniques et des systèmes non-avionique est permise, au moins en partie, par l'invention. Avantageusement et en particulier, la flexibilité et/ou la capacité de calcul (propre ou par déport via le Cloud) d'un appareil de type EFB peut être mise à profit pour le traitement des données du plan de vol.

### Description des figures

Différents aspects et avantages de l'invention vont apparaitre en appui de la description d'un mode préféré d'implémentation de l'invention mais non limitatif, avec référence aux figures ci-dessous :
La figure 1 illustre l'environnement technique global de l'invention;
La figure 2 illustre schématiquement la structure et les fonctions d'un système de gestion de vol de type FMS connu;
La figure 3 présente une vue d'ensemble et des exemples d'étapes du procédé selon l'invention;
La figure 4 détaille certains exemples d'étapes du procédé selon l'invention.

### Description détaillée de l'invention

Certains termes et environnements techniques sont définis ci-après.

L'acronyme ou sigle EFB correspond à la terminologie anglaise "Electronic Flight Bag" et désigne des librairies électroniques embarquées. Généralement traduit par "sac de vol électronique" ou "sacoche de vol électronique" ou "tablette de vol électronique", un EFB est un appareil électronique portable et utilisé par le personnel navigant (par exemple pilotes, maintenance, cabine..). Un EFB peut fournir des informations de vol à l'équipage, aidant celui-ci à effectuer des tâches (avec de moins de papiers). En pratique, il s'agit généralement d'une tablette informatique du commerce. Une ou plusieurs applications permettent la gestion de l'information pour des tâches de gestion de vol. Ces plateformes informatiques d'usage général sont destinées à réduire ou remplacer le matériel de référence sous forme papier, souvent trouvés dans le bagage à main du "Pilot Flight Bag" et dont la manipulation peut être fastidieuse. La documentation papier de référence comprend généralement les manuels de pilotage, les différentes cartes de navigation et les manuels d'opérations au sol. Ces documentations sont avantageusement dématérialisées dans un EFB. En outre, un EFB peut héberger des applications logicielles spécialement conçues pour automatiser des opérations conduites manuellement en temps normal, comme par exemple les calculs de performances de décollage (calcul de vitesse limite, etc).

Différentes classes de matériel EFB existent. Les EFB de classe 1 sont des appareils électroniques portatifs (PED), qui ne sont normalement pas utilisés durant le décollage et les opérations de débarquement. Cette classe d'appareil ne nécessite pas un processus administratif de certification ou d'autorisation particulière. Les appareils EFB de classe 2 sont normalement disposés dans le cockpit, e.g. montés dans une position où ils sont utilisés durant toutes les phases de vol. Cette classe d'appareils nécessite une autorisation d'utilisation préalable. Les appareils de classe 1 et 2 sont considérés comme des appareils électroniques portatifs. Des installations fixes de classe 3, telles que des supports informatiques ou des stations d'accueil fixes installées dans le cockpit des aéronefs exigent généralement l'approbation et une certification de la part du régulateur.

L'acronyme ou sigle FMS correspond à la terminologie anglaise "Flight Management System" et désigne les systèmes de gestion de vol des aéronefs. Lors de la préparation d'un vol ou lors d'un déroutement, l'équipage procède à la saisie de différentes informations relatives au déroulement du vol, typiquement en utilisant un dispositif de gestion de vol d'un aéronef FMS. Un FMS comprend des moyens de saisie et des moyens d'affichage, ainsi que des moyens de calcul. Un opérateur, par exemple le pilote ou le copilote, peut saisir via les moyens de saisie des informations telles que des RTA, ou " waypoints ", associés à des points de cheminement, c'est-à-dire des points à la verticale desquels l'aéronef doit passer. Les moyens de calcul permettent notamment de calculer, à partir du plan de vol comprenant la liste des waypoints, la trajectoire de l'aéronef, en fonction de la géométrie entre les waypoints et/ou des conditions d'altitude et de vitesse.

L'acronyme IHM correspond à Interface Homme-Machine (HMI en anglais, Human Machine Interface). La saisie des informations, et l'affichage des informations saisies ou calculées par les moyens d'affichage, constituent une telle interface homme-machine. Avec des dispositifs de type FMS connus, lorsque l'opérateur saisit un point de cheminement, il le fait via un affichage dédié affiché par les moyens d'affichage. Cet affichage peut éventuellement également afficher des informations relatives à la situation temporelle de l'aéronef vis-à-vis du point de cheminement considéré. L'opérateur peut alors saisir et visualiser une contrainte de temps posée pour ce point de cheminement. De manière générale, les moyens IHM permettent la saisie et la consultation des informations de plan de vol.

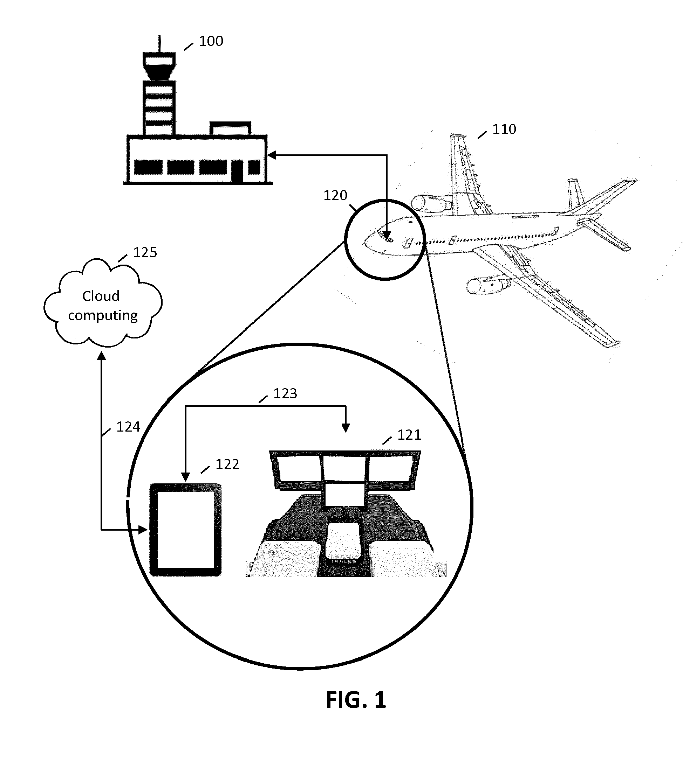

La figure 1 illustre l'environnement technique global de l'invention. Des équipements avioniques ou des moyens aéroportuaires 100 (par exemple une tour de contrôle en lien avec les systèmes de contrôle aérien) sont en communication avec un aéronef 110. Un aéronef est un moyen de transport capable d'évoluer au sein de l'atmosphère terrestre. Par exemple, un aéronef peut être un avion ou un hélicoptère (ou bien encore un drone. L'aéronef comprend un cabine de pilotage ou un cockpit 120. Au sein du cockpit se trouvent des équipements de pilotage 121 (dits équipements avioniques), comprenant par exemple un ou plusieurs calculateurs de bord (moyens de calcul, de mémorisation et de stockage de données), dont un FMS, des moyens d'affichage ou de visualisation et de saisie de données, des moyens de communication, ainsi que (éventuellement) des moyens de retours haptiques. Un EFB 122 peut se trouver à bord, de manière portative ou intégrée dans le cockpit. Ledit EFB peut interagir (communication bilatérale 123) avec les équipements avioniques 121. L'EFB peut également être en communication 124 avec des ressources informatiques externes, accessible par le réseau (par exemple informatique en nuage ou "Cloud computing" 125. En particulier, les calculs peuvent s'effectuer localement sur l'EFB ou de manière partielle ou totale dans les moyens de calculs accessibles par le réseau. Les équipements de bord 121 sont généralement certifiés et régulés tandis que l'EFB 122 et les moyens informatiques connectés 125 ne le sont généralement pas (ou dans une moindre mesure). Cette architecture permet d'injecter de la flexibilité du côté de l'EFB 122 en s'assurant d'une sécurité contrôlée du côté de l'avionique embarquée 121.

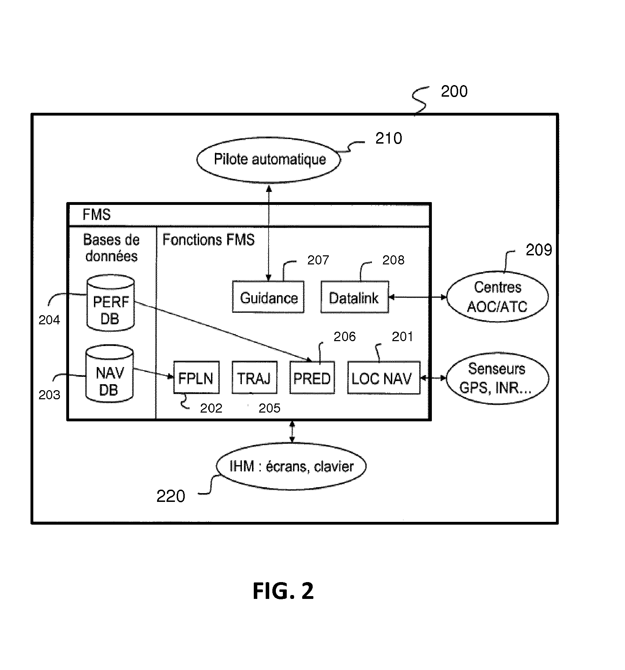

La figure 2 illustre schématiquement la structure et les fonctions d'un système de gestion de vol de type FMS connu. Un système de type FMS 200 disposé dans le cockpit 120 et les moyens avioniques 121 dispose d'une interface homme-machine 220 comprenant des moyens de saisie, par exemple formés par un clavier, et des moyens d'affichage, par exemple formés par un écran d'affichage, ou bien simplement un écran d'affichage tactile, ainsi qu'au moins les fonctions suivantes:
- Navigation (LOCNAV) 201, pour effectuer la localisation optimale de l'aéronef en fonction des moyens de géolocalisation 230 tels que le géo-positionnement par satellite ou GPS, GALILEO, les balises de radionavigation VHF, les centrales inertielles. Ce module communique avec les dispositifs de géolocalisation précités ;
- Plan de vol (FPLN) 202, pour saisir les éléments géographiques constituant le "squelette" de la route à suivre, tels que les points imposés par les procédures de départ et d'arrivée, les points de cheminement, les couloirs aériens, communément désignés "airways" selon la terminologie anglaise. Les fonctions faisant l'objet de la présente invention affectent ou concernent cette partie du calculateur.
- Base de données de navigation (NAVDB) 203, pour construire des routes géographiques et des procédures à partir de données incluses dans les bases relatives aux points, balises, legs d'interception ou d'altitude, etc;
- Base de données de performance, (PERFDB) 204, contenant les paramètres aérodynamiques et moteurs de l'appareil ;
- Trajectoire latérale (TRAJ) 205, pour construire une trajectoire continue à partir des points du plan de vol, respectant les performances de l'aéronef et les contraintes de confinement (RNP) ;
- Prédictions (PRED) 206, pour construire un profil vertical optimisé sur la trajectoire latérale et verticale et donnant les estimations de distance, heure, altitude, vitesse, carburant et vent notamment sur chaque point, à chaque changement de paramètre de pilotage et à destination, qui seront affichées à l'équipage;
- Guidage (GUID) 207, pour guider dans les plans latéraux et verticaux l'aéronef sur sa trajectoire tridimensionnelle, tout en optimisant sa vitesse, à l'aide des informations calculées par la fonction Prédictions 206. Dans un aéronef équipé d'un dispositif de pilotage automatique 210, ce dernier peut échanger des informations avec le module de guidage 207 ;
- Liaison de données numériques (DATALINK) 208 pour échanger des informations de vol entre les fonctions Plan de vol/Prédictions et les centres de contrôle ou les autres aéronefs 209.

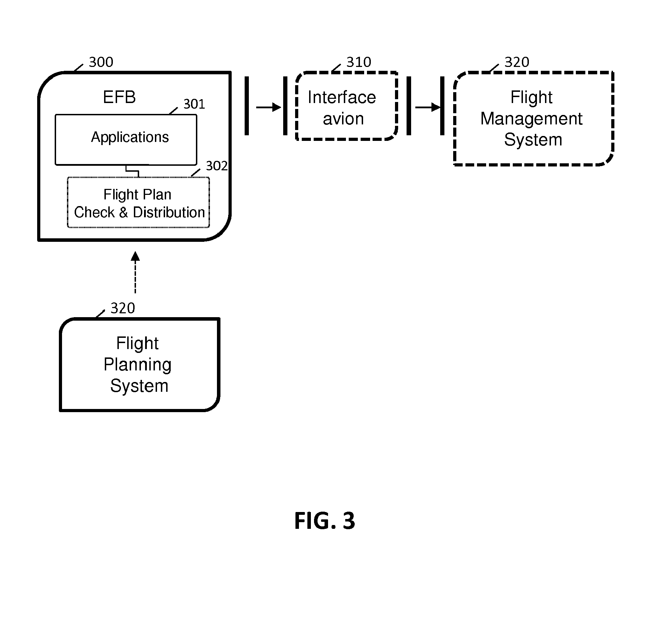

La figure 3 présente une vue d'ensemble et des exemples d'étapes du procédé selon l'invention. Dans un mode de réalisation, les informations du plan de vol sont avantageusement centralisées au sein d'un appareil de type EFB 300. Par exemple, une fonction ou application "Flight Plan Check & Management" 302 (parmi d'autres fonctions ou applications 301) appelée depuis un tel EFB 300 peut assurer diverses opérations de gestion du plan de vol ainsi consolidé. En particulier, l'EFB peut transmettre, via l'interface avion 310, les données de plan de vol, vérifiées et traitées, au FMS 320 (calculateur de bord intégré à l'avion). Le pilote consulte les données et valide en retour les différentes parties du plan de vol.

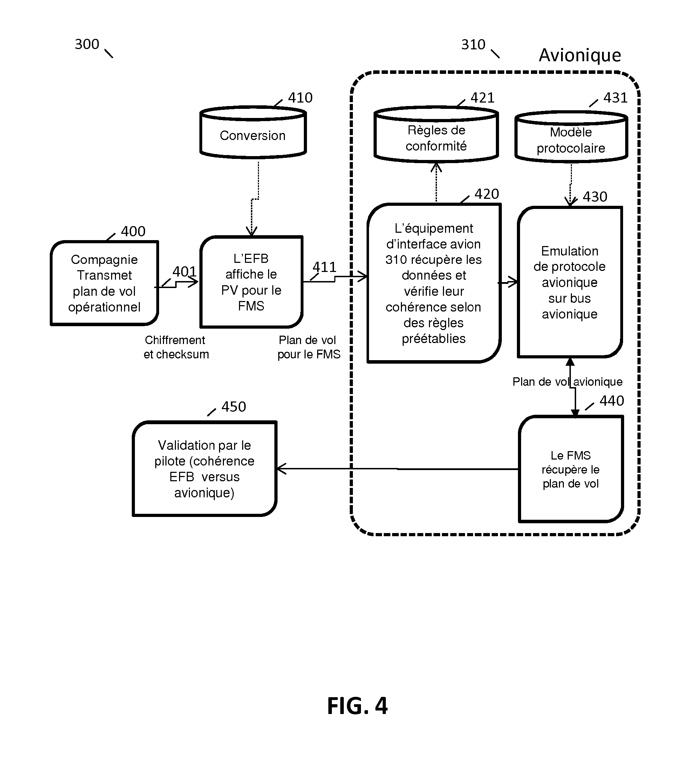

La figure 4 détaille certains exemples d'étapes du procédé selon l'invention. Sont en particulier illustrés les échanges d'informations et les passerelles entre la partie avionique certifiée et régulée 121 (FMS et équipements d'interface), schématisée par les pointillés sur la figure, et un environnement technique "ouvert" et non certifié (EFB & Flight Planning System). La figure souligne en particulier les aspects relatifs à la sécurité et à l'intégrité des données réinjectées dans les systèmes avioniques.

A l'étape 400, le Flight System Planning (par exemple celui de la Compagnie aérienne) transmet (par exemple via Wifi, 3G/4G ou USB), le plan de vol opérationnel au sein du dossier de vol. Le système EFB peut par exemple inclure une fonction "Flight Plan Check & Management" qui reçoit les données du sol depuis ce "Flight Planning System", en s'assurant de la sécurité (cryptage ou chiffrement, protocole sécurisé, authentification, etc), ainsi que de l'intégrité des données (checksum) et également, en s'assurant qu'un opérateur puisse valider la requête si requis par la réglementation. Les données manipulées peuvent être standardisées (par exemple selon ARINC 633). Elles sont généralement dans un format de langage structuré type XML. L'EFB collecte et centralise les données initiales du plan de vol opérationnel.

A l'étape 401, le plan de vol opérationnel est chiffré et une valeur de hash est calculée (checksum).

A l'étape 402, au moyen d'un fichier de conversion, l'EFB affiche le plan de vol pour le Flight Management System 200.

A l'étape 410, l"EFB déchiffre les données et vérifie le checksum. Il affiche le plan de vol pour la préparation de mission et filtre les données nécessaires au Flight Management System (et/ou transmet la référence de plan de vol pré-rempli).

A l'étape 411, le plan de vol est transmis au FMS 200.

A l'étape 420, l'équipement d'interface avion 310 récupère les données et vérifie leur cohérence selon des règles préétablies (par exemple des règles dites de conformité 421). Ces règles per exemple vérifient les détails du plan de vol, l'existence et la pertinence des données, etc.

A l'étape 430, l'équipement d'interface avion 310 émule un protocole de communication de type ACARS (communication air-sol), reçu d'un modèle protocolaire 431, de façon à transmettre le plan de vol dans un protocole avionique et sur un bus avionique.

A l'étape 440, le Flight Management System récupère le plan de vol tel que vérifié et validé par les systèmes avioniques certifiés et le propose au pilote pour validation, via l'EFB. Le pilote valide (ou non, ou partiellement) le nouveau plan de vol en s'assurant de la cohérence des données entre celles de l'EFB et celles issues de l'avionique. En particulier, un affichage dédié sur l'EFB peut également simuler les étapes de traitement des équipements avionique: le pilote peut comparer les données entre celles affichées sur sa tablette EFB 300 et celles affichées sur les équipements avioniques 310.

La présente invention peut s'implémenter à partir d'éléments matériel et/ou logiciel. Elle peut être disponible en tant que produit programme d'ordinateur sur un support lisible par ordinateur. Le support peut être électronique, magnétique, optique ou électromagnétique. Les moyens ou ressources informatiques peuvent être distribués.

## Revendications

1. Procédé mis en oeuvre par ordinateur de gestion des données d'un plan de vol d'un aéronef comprenant les étapes consistant à:
- collecter des données initiales d'un plan de vol opérationnel depuis un système de planification de vol FPS par un appareil électronique de type sac de vol électronique EFB;
- vérifier, filtrer, convertir et afficher par ledit EFB lesdites données initiales en un plan de vol consolidé à destination du pilote;
- communiquer par ledit EFB lesdites données vérifiées et converties au système avionique du système de gestion de vol FMS, ledit FMS étant apte à calculer un plan de vol avionique à partir des données converties;
- récupérer les données du plan de vol avionique tel que traitées par le système de gestion de vol FMS.

2. Procédé selon la revendication 1, le système de gestion de vol FMS vérifiant la sécurité et/ou l'intégrité des données initiales converties au moyen de règles de conformité prédéfinies.

3. Procédé selon la revendication 2, le procédé comprenant en outre une étape d'émulation de protocole avionique par le système de gestion de vol FMS de manière à calculer un plan de vol avionique à partir des données de plan de vol converties.

4. Procédé selon la revendication 3, comprenant en outre une étape de comparaison du plan de vol avionique tel que calculé par le système de gestion de vol FMS avec les données initiales de plan de vol opérationnel.

5. Procédé selon la revendication 4, l'appareil électronique de type sac de vol électronique EFB comprenant des moyens d'affichage et l'étape de comparaison du procédé comprenant la simulation et l'affichage sur ledit appareil électronique de type sac de vol électronique EFB du traitement avionique des données initiales du plan de vol opérationnel.

6. Procédé selon la revendication 5, comprenant en outre la réception d'une ou plusieurs modifications d'une ou plusieurs données initiales du plan de vol opérationnel.

7. Procédé selon la revendication 6, comprenant la répétition d'une ou de plusieurs étapes parmi lesdites étapes de collecte, conversion, récupération, communication, comparaison ou de simulation.

8. Procédé selon l'une quelconque des revendications précédentes, comprenant en outre une étape de chiffrement des données avant envoi au système de gestion de vol FMS.

9. Procédé selon l'une quelconque des revendications précédentes, le sac de vol électronique EFB étant une tablette informatique.

10. Produit programme d'ordinateur, comprenant des instructions de code permettant d'effectuer les étapes du procédé selon l'une quelconque des revendications 1 à 9, lorsque ledit programme est exécuté sur un ordinateur.

11. Système comprenant des moyens pour mettre en oeuvre une ou plusieurs étapes du procédé selon l'une quelconque des revendications 1 à 9.
